# FASCICULE DE BREVET EUROPEEN

(11) **EP 2 371 628 B1**
(45) Date de publication et mention de la délivrance du brevet: **22.01.2014**
(21) Numéro de dépôt: 11290132.7
(22) Date de dépôt: 16.03.2011
(51) Int. Cl.: B60R 19/54

(54) **Dispositif de sectionnement d'un câble disposé sur le passage d'un véhicule**
Vorrichtung zum Durchschneiden eines den Weg eines Fahrzeugs querenden Kabels
Device for cutting a cable crossing the way of a vehicle

(30) Priorité: 31.03.2010 FR 1001357
(43) Date de publication de la demande: 05.10.2011
(73) Titulaire: NEXTER Systems, 42328 Roanne (FR)
(72) Inventeur: Baptista, Daniel, 18023 Bourges (FR)
(74) Mandataire: Célanie, Christian

(56) Documents cités:
- CA-A1- 977 792
- DE-C- 284 346
- US-A- 1 614 856
- US-A- 3 743 316

## Description

Le secteur technique de la présente invention est celui des dispositifs de sécurité montés sur des véhicules. L'invention concerne notamment les dispositifs de sectionnement de câbles ou fils disposés par exemple en travers du chemin des véhicules.

Les dispositifs de sectionnement de fils ou de câbles sont par exemple utilisés sur des véhicules militaires ou des véhicules de secours. Les câbles à sectionner sont par exemple des câbles électriques se trouvant accidentellement proches du sol ou des câbles volontairement destinés à entraver les véhicules ou encore des câbles destinés à piéger et à blesser un conducteur ou un opérateur embarqué à bord du véhicule.

Le brevet DE-0284346 décrit un dispositif coupe câble dans lequel deux bras formant un parallélogramme déformable sont montés pivotants par rapport au véhicule. Un bras avant porte des zones de coupe et un bras arrière porte des biellettes ciseau articulées. On note que le bras arrière vient en appui contre un bloc butée tout en comprimant un ressort de rappel. Les sollicitations des bras combineront des efforts en flexion et en traction ce qui nécessitera un renfort de la structure des bras.

Le document US-1614856 décrit un dispositif selon le préambule de la revendication 1 composé de deux lames mobiles l'une par rapport à l'autre pour produire un mouvement de coupe, l'une des lames étant commandée par un dispositif à galet roulant sur une rampe. Ce système est cependant complexe à fabriquer et à entretenir. De plus, ce dispositif coupe-fil est donc monté rigidement sur le véhicule et il n'est pas possible de l'escamoter.

Le document US-5586785 décrit un exemple de dispositif coupe-fil comprenant une rampe crantée disposée au-dessus du capot d'un véhicule et se terminant par un crochet. La structure décrite est cependant très massive et encombrante. De plus, les différents organes de fixation impliquent un aménagement important du véhicule. Enfin, cet exemple de dispositif coupe-fil n'est pas prévu pour être escamoté.

Le document WO2009/001151 décrit un exemple de dispositif coupe-fil comprenant une barre de déviation se terminant par est très massive et encombrante. De plus les différents organes de fixation impliquent un aménagement important du véhicule. Enfin, cet exemple de dispositif coupe-fil n'est pas prévu pour être escamoté, mais nécessite un démontage en différentes parties pour être rangé, par exemple pour dégager le champ de vision.

La grande majorité des réalisations connues implique un gabarit important du dispositif entraînant, par exemple dans le cas d'un véhicule militaire, une réduction des possibilités de vision par les servants, de pointage de l'arme et de tir.

Le but de la présente invention est de proposer un dispositif coupe-fil permettant de pallier les inconvénients de l'art antérieur en fournissant un dispositif de faible gabarit facilement escamotable et/ou démontable.

L'invention a donc pour objet un dispositif de sectionnement d'un câble disposé sur le passage d'un véhicule, comprenant un bras de captation du câble, caractérisé en ce que le bras est monté mobile en rotation autour d'une articulation solidaire du véhicule entre une position d'attente active du câble et une position angulaire de coupe, ledit bras comportant au moins un crochet de prise du câble, et en ce que ledit bras est soumis à l'action d'un moyen de rappel de façon à le ramener de la position angulaire de coupe à la position d'attente active , ledit bras passant à la position angulaire de coupe par rapport au véhicule automatiquement par le contact du câble contre l'action du moyen de rappel, la position angulaire de coupe étant une position qui s'ajuste automatiquement au contact du câble qui est rompu par sa mise en tension par le bras, la position angulaire de coupe étant telle que l'effort exercé sur le bras par le câble ainsi mis en tension passe par l'axe de l'articulation, le bras se trouvant alors sollicité principalement en traction.

Selon un mode réalisation de l'invention, le bras est relié à l'articulation pour être appliqué contre le véhicule en position escamotée.

Selon une autre caractéristique de l'invention, le dispositif comprend un moyen de maintien qui est fixé au véhicule de manière détachable afin de permettre l'escamotage du bras vers l'avant ou l'arrière du véhicule.

Selon encore une autre caractéristique de l'invention, le moyen de maintien est un câble enroulable et déroulable pour assurer le rabattement du bras sur le véhicule dans une position escamotée.

Selon une variante, le bras peut être amené vers une position escamotée vers l'avant par le moyen de rappel lorsque le moyen de maintien est relâché ou déroulé.

Selon encore une autre caractéristique de l'invention, l'articulation est fixée directement sur le véhicule.

Selon encore une autre caractéristique de l'invention, l'axe de l'articulation est guidé dans un logement fixé au véhicule.

Selon encore une autre caractéristique de l'invention, l'articulation est fixée sur un organe intermédiaire fixé au véhicule.

Selon encore une autre caractéristique de l'invention, le dispositif comprend au moins un second crochet fixé au bras.

L'invention concerne également un véhicule comprenant au moins un dispositif de sectionnement tel que décrit précédemment.

Avantageusement, le véhicule est équipé de deux dispositifs de sectionnement disposés à l'avant du toit du véhicule.

Avantageusement encore, chaque dispositif de sectionnement comprend au moins un crochet disposé à une hauteur déterminée, dans ladite position d'attente, de façon à ce que ce crochet se trouve au-dessus du toit du véhicule ou au-dessus d'un ou plusieurs servants prenant place à bord du véhicule ou au-dessus de la tourelle du véhicule.

L'articulation peut par exemple aussi être réalisée sous la forme d'une rotule. On prévoira dans ce cas un dispositif de rappel permettant de plaquer le bras contre la chape de fixation.

Le débattement angulaire du bras couvre par exemple un angle de 90 à 180 degrés, en considérant sa position initiale sensiblement verticale.

Un tout premier avantage de la présente invention réside dans la simplicité de réalisation du dispositif mettant en oeuvre des moyens n'entraînant pas de modification du véhicule ou bien des modifications mineures.

Un autre avantage de l'invention réside dans l'obtention d'une hauteur de coupe importante tout en minimisant la taille et la masse du dispositif.

Un autre avantage de l'invention réside dans l'utilisation d'un dispositif unique limitant dans de fortes proportions les restrictions d'emploi de la tourelle du véhicule, en assurant une visibilité maximale sans angle mort.

D'autres caractéristiques, avantages et détails de l'invention seront mieux compris à la lecture du complément de description qui va suivre de modes de réalisation donnés à titre d'exemple en relation avec des dessins sur lesquels :
- les figures 1 et 2 représentent chacune une vue en perspective d'un exemple de dispositif de sectionnement selon l'invention,
- la figure 3 représente une vue en perspective d'un exemple d'articulation,
- la figure 4 représente une vue en perspective d'un exemple de dispositif de sectionnement selon l'invention,
- les figures 5, 6 et 7 représentent, en vue de côté, des positions successives d'un exemple de réalisation du dispositif de sectionnement selon l'invention,
- les figures 8, 9 et 10 représentent, en vue de côté, des positions successives d'un autre exemple de réalisation du dispositif de sectionnement selon l'invention,
- la figure 11 représente une vue en perspective d'un exemple de dispositif de sectionnement selon l'invention en position d'attente,
- la figure 12 représente une vue de côté d'un exemple de dispositif de sectionnement selon l'invention en position escamotée vers l'avant,
- la figure 13 représente une vue de côté d'un exemple de véhicule selon l'invention équipé d'un dispositif de sectionnement en position d'attente.

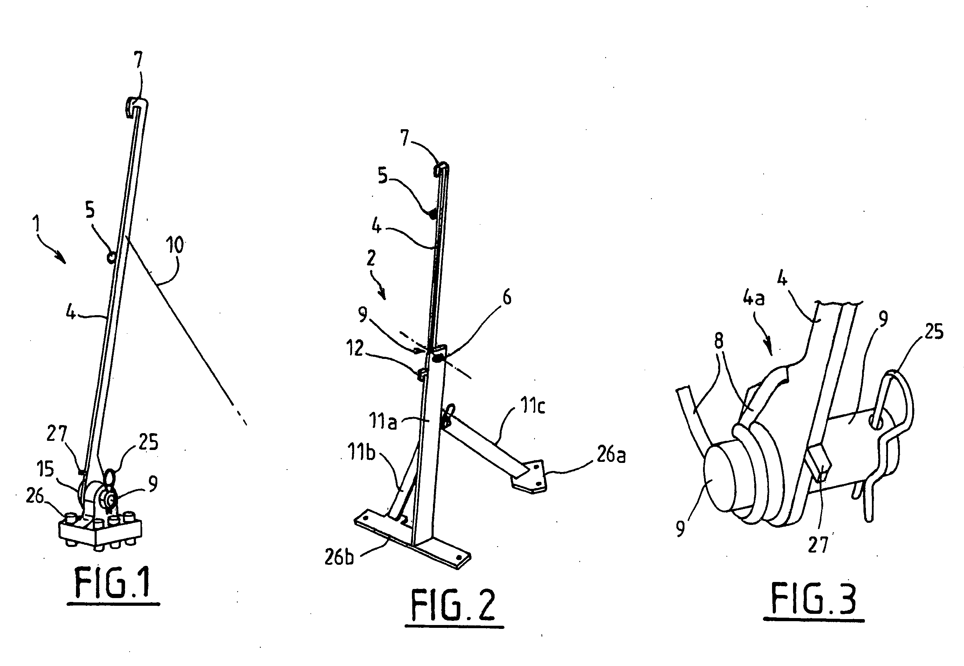

Comme représenté aux figures 1 et 2, un dispositif de sectionnement, référencé 1 ou 2, comprend un bras 4 de captation d'un câble 5 à sectionner, articulé par rapport à un véhicule 3. Suivant la figure 1, le bras 4 est mobile en rotation autour d'une articulation 9 fixée à un véhicule 3 et suivant la figure 2 ce bras est articulé par rapport à un organe intermédiaire 11. Ces deux figures représentent la position d'attente active du dispositif.

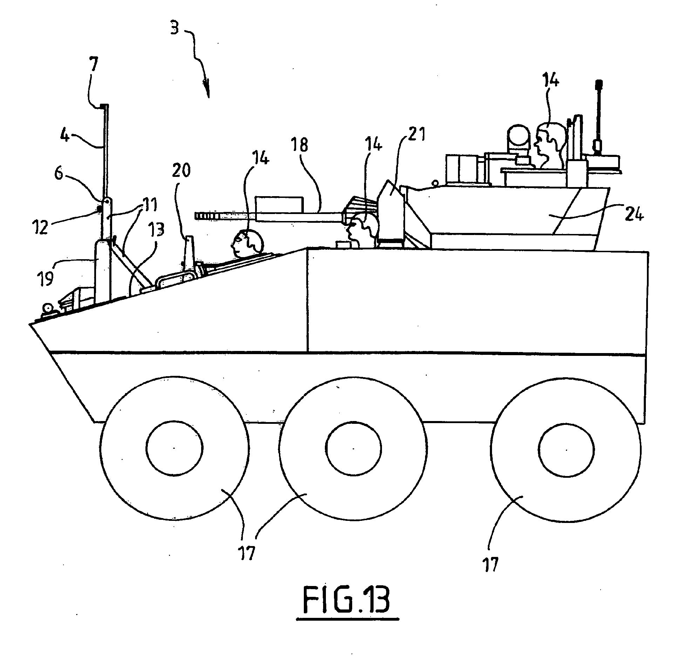

Un exemple d'articulation est notamment représenté à la figure 3. Un exemple de véhicule 3 est représenté à la figure 13.

Suivant la figure 1, le bras 4 est équipé d'un crochet 7 recourbé vers l'articulation et d'une butée 27. Le bras 4 est par exemple maintenu dans une position d'attente par un moyen de maintien 10, tel un lien, qui retient ce bras dans la position d'attente contre l'action d'un organe de rappel 8 (tel un ressort), l'axe de rotation 9 étant guidé dans le logement pratiqué dans une chape 15 solidaire d'une embase 26. Cette embase est fixée par des boulons au véhicule.

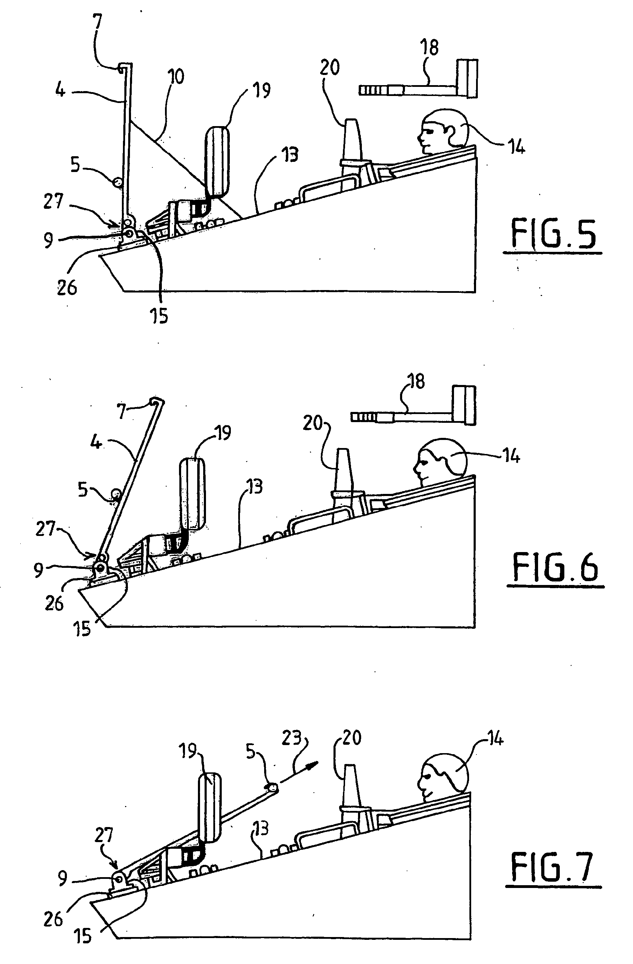

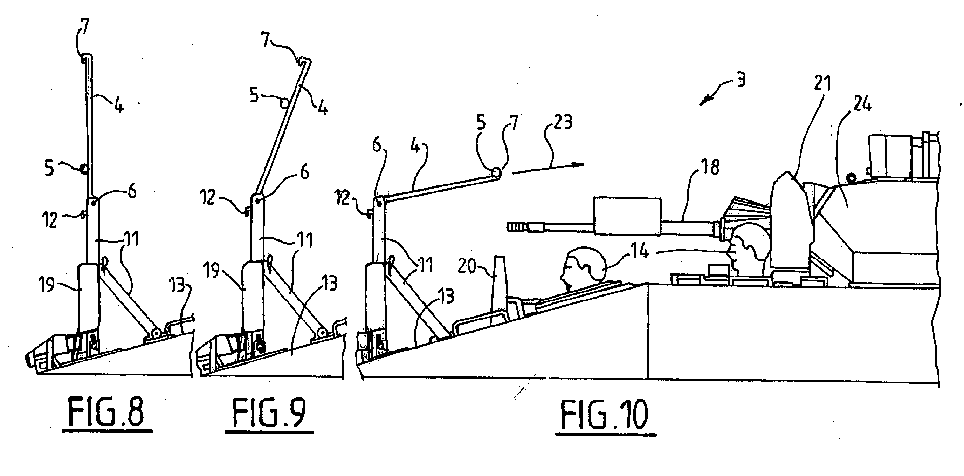

Le bras 4 occupe d'autre part une position angulaire de coupe qui est ajustée automatiquement au contact du câble 5, comme illustré par les représentations successives aux figures 5, 6 et 7 et aux figures 8, 9 et 10. Le bras va être entraîné par le câble en provoquant la tension de ce dernier puis, comme suite à la rotation du bras, la coupe du câble suivant une direction d'effort de coupe passant par l'axe de rotation 9 ce qui minimise les efforts reçus par le bras 4 et permet d'éliminer les renforts latéraux.

Comme représenté à la figure 3, l'organe de rappel 8 est constitué par un ressort hélicoïdal enroulé autour de l'axe de rotation 9 du bras 4 de manière à le ramener, en permanence, dans sa position de repos, vers l'avant du véhicule comme cela sera expliqué ci-après. Une extrémité du ressort est engagée dans une encoche 4a du bras et l'autre extrémité est maintenue sur l'embase 26.

L'axe de rotation 9 est muni à une extrémité d'un perçage pour le passage d'une goupille 25 de blocage. L'axe 9 est inséré dans le logement pratiqué dans la chape 15 de l'embase 26, le bras 4 et la goupille 25 étant disposés de part et d'autre de la chape. Cette chape peut être la chape de levage du véhicule. La goupille est par exemple une goupille fendue à oeil. La mise en oeuvre ou le démontage sont réalisés rapidement et sans outils, la goupille étant par exemple placée ou retirée manuellement. L'extrémité du lien 10 peut être également manipulée par un opérateur 14. Il est simple et rapide de mettre en place ou de retirer l'axe 9 de rotation du bras 4 dans le logement de la chape 15. Le ressort de rappel est mis hors tension lorsque le bras 4 est dans une position escamotée, facilitant ainsi son montage ou son démontage.

L'embase 26 de fixation est par exemple équipée de trous pour recevoir les boulons de fixation sur le véhicule. La fixation est par exemple réalisée par des boulons ou par tout autre moyen.

Le fait de fixer un dispositif de sectionnement sur une seule pièce, telle la chape de levage, qui est de plus un standard sur de nombreux véhicules, permet d'obtenir une solution standard adaptable automatiquement sur plusieurs types de véhicule. La chape 15 est par exemple réalisée en métal ou dans un alliage métallique, tel que par exemple de l'acier inoxydable ou de l'aluminium ou du titane.

Le bras 4 est réalisé sous la forme d'une barre de section transversale rectangulaire ou ronde. La compacité du dispositif de sectionnement permet, dans la position d'attente active, de minimiser l'impact sur le champ de vision, également désigné par étoile de vision ou par gabarit de tir.

Le bras 4, la butée 27 et le crochet 7 sont par exemple réalisés d'une seule pièce ou par des éléments isolés assemblés les uns aux autres par exemple par soudage. Le bras est réalisé en métal ou dans un alliage métallique, tel que par exemple de l'acier inoxydable ou de l'aluminium ou du titane.

Le lien 10 est fixé à une extrémité sur le bras 4 par un élément serrant à vis ou à l'aide d'un trou dans lequel passe le lien 10. Le lien 10 est par exemple un câble souple, par exemple en métal ou dans un alliage métallique.

On voit que le dispositif de sectionnement est réalisé à l'aide d'un nombre de pièces réduit, ces pièces étant de plus de conception simple. La masse, la zone de stockage et le coût sont ainsi optimisés.

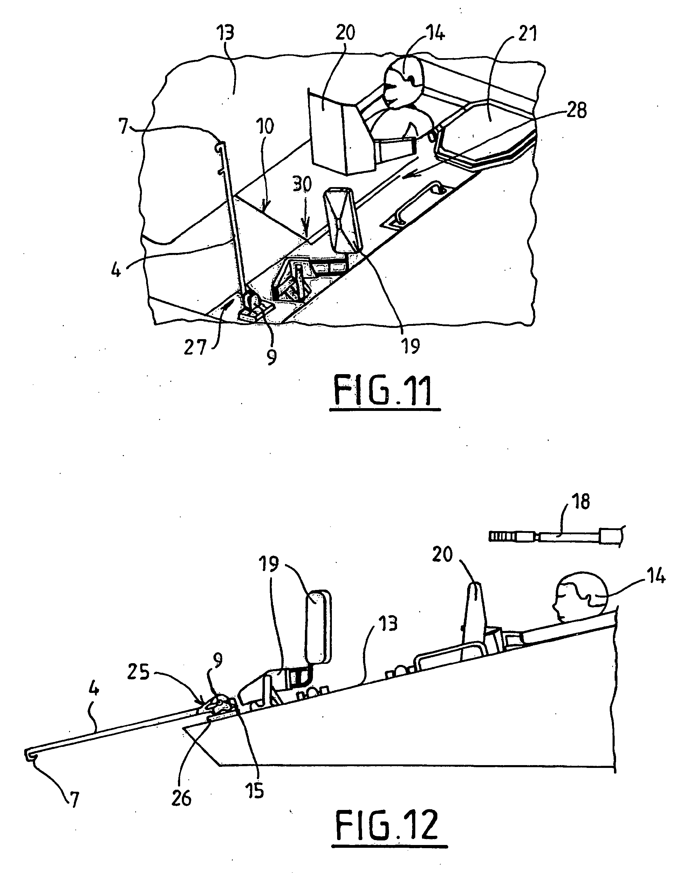

Quand le lien 10 de retenue est détaché, le bras 4 peut se rabattre vers l'avant dans une première position escamotée, comme représenté à la figure 12. Le bras s'appuie par la butée 27 sur l'embase 26, dans cette position escamotée vers l'avant. La butée 27 est par exemple disposée sur le bras et proche de l'articulation. Le bras 4 s'appuie sur le véhicule dans la première position d'escamotage.

Selon un autre exemple non limitatif, le bras 4 peut être rabattu par un enroulement du lien 10 dans une position extrême et maintenir ainsi le bras 4 appliqué sur le véhicule vers l'arrière dans une deuxième position d'escamotage.

Le bras 4 reste dans une position d'attente dans laquelle un câble peut être intercepté. Il peut par ailleurs avoir une position escamotée dans laquelle le champ de vision des servants 14 embarqués à bord du véhicule est amélioré. Il n'est donc pas nécessaire de démonter le bras 4 pour améliorer le champ de vision.

Comme indiqué en relation avec la figure 2, le bras 4 peut être fixé sur un organe de surélévation 11a fixé au véhicule. L'articulation 9 du bras 4 selon la figure 2 n'est représentée que schématiquement. Elle peut être identique à l'articulation décrite précédemment en relation avec la figure 3.

L'organe 11a de surélévation est une barre verticale comprenant à son extrémité supérieure l'articulation 9 avec le bras 4 et à son extrémité inférieure une équerre de fixation sur une plaque 26b fixée au véhicule. L'organe 11a est d'autre part maintenu par deux jambes de force 11b et 11c. Les jambes de force 11b et 11c sont respectivement fixées chacune à la plaque 26a et la plaque 26b fixées au véhicule. Les jambes de force 11b et 11c sont par exemple inclinées environ à 45° par rapport à l'organe 11a de surélévation. Les jambes de force sont réduites en résistance et en encombrement, par rapport à un dispositif connu selon l'art antérieur, l'effort à reprendre étant ici dépendant de la hauteur de l'élément 11a de surélévation. Concrètement, et grâce à l'articulation 9, l'effort maximal reçu par les jambes de force 11b, 11c ne dépasse pas celui qui serait provoqué par un câble arrêté directement par l'extrémité de l'organe 11a, même si ce câble est saisi par le bras 4 à une distance bien plus importante des plaques de fixation 26a,26b sur le véhicule. En effet du fait du pivotement du bras 4, l'effort de coupe va passer par l'articulation 9 donc par l'extrémité de l'organe 11a et le bras 4 n'est sollicité qu'en traction.

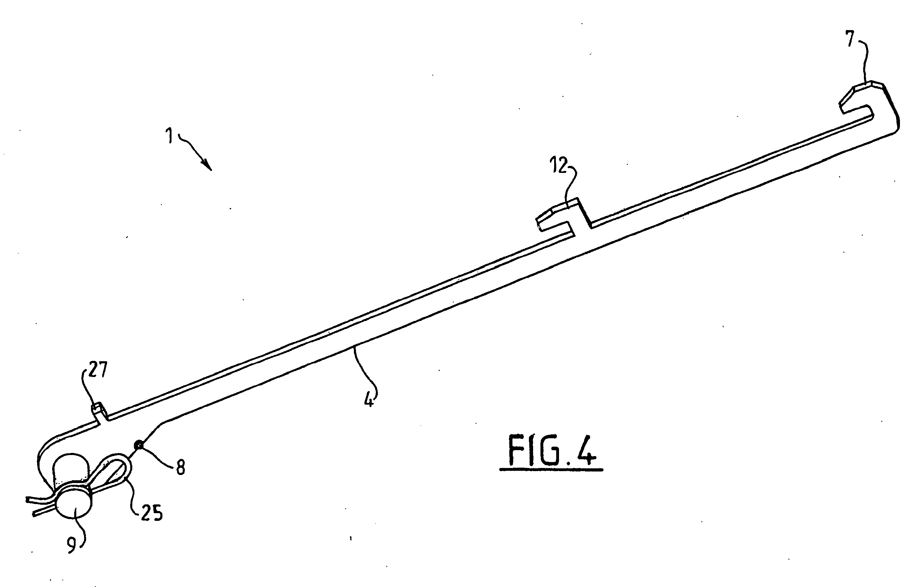

Comme représenté à la figure 4, le dispositif de sectionnement peut comprendre au moins un second crochet 12 fixé au bras 4. Le second crochet est par exemple fixé dans une partie médiane du bras 4. Il est possible de disposer plusieurs crochets sur le bras afin de couper au plus tôt le câble 5 qui remonte le long du bras 4. On assure ainsi un sectionnement plus rapide des câbles. Le câble 5 va être arrêté dès qu'il rencontre un des crochets. Les crochets 7 et 12 se présentent généralement sous la forme d'un L dont une branche revient vers l'articulation 9.

Selon un exemple de réalisation, un second crochet peut aussi être disposé sur l'organe 11a de surélévation (figure 8).

Les figures 5 à 7 montrent différentes positions successives du bras 4 pour la coupe d'un fil ou d'un câble 5. Lors d'une première phase, comme représenté à la figure 5, alors que le véhicule avance vers le câble 5, le bras 4 vient en contact avec ce câble 5 à sectionner. Puis lors le la phase suivante selon la figure 6, le câble 5 se tend et incline le bras 4 vers l'arrière, le moyen de rappel exerçant une action à l'encontre de ce pivotement du bras 4. Dans la phase suivante selon la figure 7, le câble à sectionner, après avoir glissé le long du bras 4, se trouve coincé dans un crochet 7. Le véhicule continuant d'avancer, la tension dans le câble 5 augmente jusqu'à la rupture de celui-ci. Après sectionnement du câble, le ressort de rappel 8 ramène alors le bras 4 dans la position haute d'attente active, telle que représentée à la figure 5.

Les figures 8 à 10 montrent les différentes positions pour la coupe d'un fil ou d'un câble 5 lorsque le dispositif de sectionnement comprend un organe de surélévation 11. Lors de la première phase, comme représenté à la figure 8, le véhicule avance vers le câble et le bras 4 vient en contact avec le câble 5 à sectionner. Dans la phase suivante selon la figure 9, le câble 5 se tend et provoque l'inclinaison du bras 4 vers l'arrière, le moyen de rappel disposé dans l'articulation 6, exerçant une action à l'encontre de ce pivotement. Lors de la phase suivante suivant la figure 10, le câble à sectionner, après avoir glissé le long du bras 4, se trouve coincé dans un crochet 7. Le véhicule continuant d'avancer, la tension du câble 5 augmente jusqu'à sa rupture. Le ressort de rappel ramène alors le bras dans la position haute d'attente active, telle que représentée à la figure 8.

Si un crochet 12 est disposé sur l'organe 11 de surélévation comme cela est visible sur ces figures 8-10, celui-ci permet un sectionnement du câble 5 de manière connue directement par l'organe de surélévation 11. Cette disposition permet de sectionner les câbles se situant relativement proches de la paroi supérieure 13 du véhicule.

Le bras 4 disposé au-dessus de l'organe 11 de surélévation peut être escamotable. Ce bras 4 peut alternativement être maintenu en position haute d'attente contre une butée fixe, une position d'escamotage vers l'avant étant cependant possible en retirant la butée fixe. Le bras peut aussi être fixé à un lien 10 permettant une position d'escamotage vers l'avant ou vers l'arrière. Le bras peut être retenu par le lien 10 dans la position haute d'attente, le lien 10 remplaçant alors une butée fixe pour avoir une position d'escamotage vers l'avant.

En considérant les figures 8 et 10, on voit que le crochet 7 du bras 4 est disposé à une hauteur telle que ce crochet se trouve au-dessus d'une paroi supérieure (ou glacis) 13 du véhicule 3, au-dessus des servants 14 prenant place à bord du véhicule 3, au-dessus de la tourelle 24 du véhicule, au-dessus du pare-brise 20, au-dessus du rétroviseur 19, au-dessus du canon 18. La hauteur de protection est réglée par la taille du bras 4 mobile, en prenant aussi en compte la hauteur de l'organe 11 de surélévation lorsqu'il est présent. On notera qu'un dispositif selon l'art antérieur, trop massif, ne couvre généralement pas une grande hauteur. Au contraire, selon la présente invention, .la couverture d'une grande hauteur par un seul dispositif de sectionnement fixé au châssis permet une protection de la tourelle, ce qui représente un avantage opérationnel déterminant.

Les figures 11 et 12 illustrent le dispositif de sectionnement fixé directement sur la paroi supérieure 13 du véhicule 3. Sur la figure 11, on voit que le lien 10 est tendu (et passe par un anneau de renvoi intermédiaire 30 solidaire de la paroi supérieure 13) et il retient le bras 4 contre l'action du moyen de rappel. Le bras 4 est disposé dans une position d'attente et son crochet 7 est situé à une hauteur maximum qui définit la hauteur protégée. Sur la figure 12, on voit que le bras 4 s'étend verticalement au dessus de tous les accessoires installés sur le toit du véhicule 19. On voit que le lien 10 est attaché d'une part au bras 4 et d'autre part sur la paroi supérieure du véhicule. Ainsi, un simple crochet permet de fixer l'extrémité 28 du lien 10 afin de le libérer en cas de besoin. Sur la figure 12, on voit que le bras 4 a été détaché du lien 10 et a été rabattu vers l'avant du véhicule par son ressort. Dans cette position, le bras 4 ne constitue aucun obstacle à la vision et au déplacement du canon 18.

Comme représenté à la figure 12, le bras 4 est disposé dans une position escamotée avant et permet aux servants 14 embarqués d'avoir une totale visibilité. Le passage en position escamotée est par exemple obtenu en décrochant l'extrémité 28 du lien 10. Cette action est réalisable rapidement et sans difficulté par un des servants 14. L'escamotage permet de réduire les restrictions de vision voire de pointage et de tir. Un escamotage rapide permet de passer rapidement en mode combat. Le dispositif de sectionnement escamoté dépasse alors faiblement du volume des chapes de levage, l'impact sur l'étoile de vision ou sur le gabarit de tir est alors minime.

La figure 13 représente un véhicule 3 à roues 17. Une tourelle 24 est portée par la paroi supérieure 13 du véhicule et porte un canon 18. Des servants 14 sont présents à bord du véhicule 3, leur tête dépassant hors du véhicule par des ouvertures aménagées dans le véhicule 3. Ces ouvertures peuvent être fermées par des trappes 21 montrées en position ouverte. Un pare-brise 20 peut être disposé devant une ouverture. Des rétroviseurs 19 sont disposés sur les côtés et à l'avant du véhicule. Sur cette figure, on voit que la hauteur du bras 4 permet d'intercepter et de sectionner un câble sans qu'il puisse se révéler dangereux pour les servants 14.

A titre de variante, on peut prévoir deux dispositifs de sectionnement disposés à l'avant et sur les côtés droit et gauche du véhicule. Les bras 4 disposés latéralement sur le véhicule 3, sont alors de préférence inclinés vers l'axe médian du véhicule du véhicule, de façon à ce que leur orientation se rapproche ou coïncide avec la direction de l'effort de sectionnement.

Le dispositif de sectionnement selon l'invention permet d'avoir une structure simple, qui est beaucoup moins massive et encombrante que les structures enseignées dans les documents US-5586785 ou WO 2009/001151. Le bras 4 s'ajuste notamment automatiquement en rotation dans une position de coupe qu'il soit fixé directement sur le toit comme le montre les figures 5-7, ou par l'intermédiaire d'un organe de surélévation comme le montre les figures 8-10. Ainsi, l'effort de torsion exercé sur le bras est très réduit. La liaison pivot du bras 4 permet de supprimer tous les efforts de couple suivant l'axe de pivot. Dans le cas de figure où le câble pourrait ne pas être perpendiculaire à la direction de déplacement du véhicule, une articulation de type rotule pourrait permettre de positionner avantageusement le bras suivant la direction de l'effort.

Une telle rotule sera interposée entre le bras 4 et l'axe 9. Des rondelles ressort seront alors disposées entre la goupille de blocage 25 et un épaulement d'appui latéral du bras porté par l'axe 9. Ainsi la rotule ne sera active que pour un certain niveau d'effort non perpendiculaire à l'axe 9 et les rondelles ressort ramèneront le bras et la rotule dans leur position initiale perpendiculaire à l'axe 9 en l'absence d'un tel effort. Bien entendu le ressort de rappel 8 sera toujours présent.

Avec l'invention, l'effort dans le bras est principalement assimilable à de la traction pure. La section du bras est alors directement comparable à celle du câble 5 à sectionner. Cela permet de réduire considérablement le dimensionnement du bras 4. Le bras 4 mobile en rotation permet d'exercer un effort de sectionnement (flèches 23), appliqué sur le câble 5 à sectionner, dans la direction de l'articulation 6 du bras 4.

La compacité du dispositif de sectionnement est un avantage important de son impact sur le champ de vision, la masse ou le stockage lorsque ce dispositif est démonté. La diminution de l'encombrement est d'une importance très grande lorsqu'il s'agit d'un véhicule militaire. Les solutions avec jambes de reprise d'effort proposées dans l'art antérieur ne sont pas toujours envisageables ou plus limitantes sur un véhicule militaire. La compacité de la solution proposée selon l'invention offre donc un avantage déterminant.

Le bras peut être fixé sur le véhicule en n'utilisant qu'une faible surface de fixation, ce qui permet notamment de fixer plusieurs dispositifs de sectionnement sur le véhicule.

Le fait de placer plusieurs dispositifs de sectionnement sur toute la largeur du véhicule permet pour un câble disposé en travers du trajet du véhicule de sectionner le câble à bonne distance du personnel.

On notera que la position escamotée du bras ne nécessite pas d'outil particulier et évite le démontage du dispositif de sectionnement. L'escamotage peut être prévu lorsque le véhicule est à l'arrêt, pour augmenter la visibilité du servant affecté à la surveillance à l'intérieur du véhicule.

La position d'attente est par exemple une position dans laquelle le bras est vertical. Le lien 10 qui exerce un effort à l'encontre du moyen 8 de rappel est relâché pour positionner le ou les dispositifs de sectionnement dans une position escamotée dans laquelle les bras sont inclinés au maximum vers l'avant.

Le bras 4 peut comprendre plusieurs crochets disposés à une même hauteur, ces crochets étant recourbés vers l'articulation et orientés dans différentes directions pour permettre la captation d'un câble quelle que soit sa position par rapport au véhicule.

Il doit être évident pour l'homme du métier que la présente invention permet d'autres variantes de réalisation. Par conséquent, les présents modes de réalisation doivent être considérés comme illustrant l'invention définie par les revendications jointes.

## Revendications

1. Dispositif de sectionnement (1, 2) d'un câble (5) disposé sur le passage d'un véhicule (3), comprenant un bras (4) de captation du câble (5) monté mobile en rotation autour d'une articulation (6, 9) solidaire du véhicule (3) entre une position d'attente active du câble et une position angulaire de coupe, ledit bras comportant au moins un crochet (7) de prise du câble, et en ce que ledit bras (4) est soumis à l'action d'un moyen de rappel (8) de façon à le ramener de la position angulaire de coupe à la position d'attente active , ledit bras passant à la position angulaire de coupe par rapport au véhicule automatiquement par le contact du câble (5) contre l'action du moyen de rappel (8), dispositif **caractérisé en ce que** la position angulaire de coupe est une position qui s'ajuste automatiquement au contact du câble qui est rompu par sa mise en tension par le bras, la position angulaire de coupe étant telle que l'effort exercé sur le bras par le câble ainsi mis en tension passe par l'axe de l'articulation (6, 9), le bras (4) se trouvant alors sollicité principalement en traction.

2. Dispositif de sectionnement (1, 2) d'un câble (5) selon la revendication 1, **caractérisé en ce que** le bras (4) est relié à l'articulation (6, 9) pour être appliqué contre le véhicule en position escamotée.

3. Dispositif de sectionnement (1, 2) d'un câble (5) selon la revendication 2, **caractérisé en ce qu'**il comprend un moyen de maintien (10) qui est fixé au véhicule (3) de manière détachable afin de permettre l'escamotage du bras vers l'avant ou l'arrière du véhicule.

4. Dispositif de sectionnement (1, 2) d'un câble (5) selon la revendication 3, **caractérisé en ce que** le moyen de maintien (10) est un câble enroulable et déroulable pour assurer le rabattement du bras (4) sur le véhicule dans une position escamotée.

5. Dispositif de sectionnement (1, 2) d'un câble (5) selon la revendication 4, **caractérisé en ce que** le bras (4) est amené vers une position escamotée vers l'avant par le moyen de rappel (8) lorsque le moyen de maintien (10) est relâché ou déroulé.

6. Dispositif de sectionnement (1, 2) d'un câble (5) selon l'une quelconque des revendications 1 à 5, **caractérisé en ce que** l'articulation (6) est fixée directement sur le véhicule (3).

7. Dispositif de sectionnement (1, 2) d'un câble (5) selon la revendication 6, **caractérisé en ce que** l'axe de l'articulation est guidé dans un logement (15) fixé au véhicule.

8. Dispositif de sectionnement (1, 2) d'un câble (5) selon l'une quelconque des revendications 1 à 5, **caractérisé en ce que** l'articulation (6) est fixée sur un organe intermédiaire (11) fixé au véhicule.

9. Dispositif de sectionnement selon l'une quelconque des revendications précédentes, **caractérisé en ce qu'**il comprend au moins un second crochet (12) fixé au bras (4).

10. Véhicule (3), **caractérisé en ce qu'**il comprend au moins un dispositif de sectionnement (1, 2) selon l'une des revendications 1 à 9.

11. Véhicule (3) selon la revendication 10, **caractérisé en ce qu'**il comprend deux dispositifs de sectionnement (1, 2) disposés à l'avant du toit du véhicule (3).

12. Véhicule selon la revendication 10 ou 11, **caractérisé en ce que** chaque dispositif de sectionnement (1, 2) comprend au moins un crochet (7) disposé à une hauteur déterminée, dans ladite position d'attente, de façon à ce que ce crochet se trouve au-dessus du toit (13) du véhicule (3) ou au-dessus d'un ou plusieurs servants (14) prenant place à bord du véhicule (3) ou au-dessus de la tourelle (24) du véhicule.

## Patentansprüche

1. Vorrichtung zum Durchtrennen (1, 2) eines Kabels (5), welches im Weg eines Fahrzeuges (3) angeordnet ist, umfassend einen Arm (4) zum Einfangen des Kabels (5), welcher drehbeweglich um ein Gelenk (6, 9), das fest mit dem Fahrzeug (3) verbunden ist, zwischen einer Position zum aktiven Warten auf das Kabel und einer abgewinkelten Position zum Schneiden montiert ist, wobei der genannte Arm wenigstens einen Haken (7) zum Erfassen des Kabels umfasst, und der genannte Arm (4) der Wirkung eines Rückhaltemittels (8) derartig unterworfen ist, dass er aus der abgewinkelten Position zum Schneiden in die Position zum aktiven Warten zurückgeführt wird, wobei der genannte Arm durch den Kontakt des Kabels (5) gegen die Wirkung des Rückhaltemittels (8) automatisch bezüglich des Fahrzeuges in die abgewinkelte Position zum Schneiden gelangt, wobei die Vorrichtung ***dadurch gekennzeichnet ist, dass*** die abgewinkelte Position zum Schneiden eine Position ist, welche sich automatisch auf den Kontakt des Kabels einstellt, welches durch dessen unter Spannungsetzen durch den Arm zerreißt, wobei die abgewinkelte Position zum Schneiden derartig ist, dass die durch das so unter Spannung gesetzte Kabel auf den Arm ausgeübte Beanspruchung durch die Achse des Gelenkes (6, 9) verläuft, wobei der Arm (4) nun hauptsächlich auf Zug belastet wird.

2. Vorrichtung zum Durchtrennen (1, 2) eines Kabels (5) nach Anspruch 1, **dadurch gekennzeichnet, dass** der Arm (4) mit dem Gelenk (6, 9) verbunden ist, um in eingeklappter Position gegen das Fahrzeug angelegt zu werden.

3. Vorrichtung zum Durchtrennen (1, 2) eines Kabels (5) nach Anspruch 2, **dadurch gekennzeichnet, dass** sie ein Haltemittel (10) umfasst, welches am Fahrzeug (3) in abnehmbarer Weise befestigt ist, um das Einklappen des Arms nach vorn oder hinten bezüglich des Fahrzeuges zu ermöglichen.

4. Vorrichtung zum Durchtrennen (1, 2) eines Kabels (5) nach Anspruch 3, **dadurch gekennzeichnet, dass** das Haltemittel (10) ein auf- und abrollbares Kabel ist, um das Absenken des Arms (4) auf das Fahrzeug in einer eingeklappten Position zu gewährleisten.

5. Vorrichtung zum Durchtrennen (1, 2) eines Kabels (5) nach Anspruch 4, **dadurch gekennzeichnet, dass** der Arm (4) in eine eingeklappte Position nach vorn durch das Rückhaltemittel (8) geführt wird, wenn das Haltemittel (10) entspannt oder aufgerollt wird.

6. Vorrichtung zum Durchtrennen (1, 2) eines Kabels (5) nach irgendeinem der Ansprüche 1 bis 5, **dadurch gekennzeichnet, dass** das Gelenk (6) direkt am Fahrzeug (3) befestigt ist.

7. Vorrichtung zum Durchtrennen (1, 2) eines Kabels (5) nach Anspruch 6, **dadurch gekennzeichnet, dass** die Achse des Gelenkes in einer Aufnahme (15) geführt ist, welche am Fahrzeug befestigt ist.

8. Vorrichtung zum Durchtrennen (1, 2) eines Kabels (5) nach irgendeinem der Ansprüche 1 bis 5, **dadurch gekennzeichnet, dass** das Gelenk (6) über ein Zwischenorgan (11) am Fahrzeug befestigt ist.

9. Vorrichtung zum Durchtrennen (1, 2) nach einem der vorhergehenden Ansprüche, **dadurch gekennzeichnet, dass** sie wenigstens einen zweiten Haken (12) umfasst, welcher am Arm (4) befestigt ist.

10. Fahrzeug (3), **dadurch gekennzeichnet, dass** es wenigstens eine Vorrichtung zum Durchtrennen (1, 2) nach einem der Ansprüche 1 bis 9 umfasst.

11. Fahrzeug (3) nach Anspruch 10, **dadurch gekennzeichnet, dass** es zwei Vorrichtungen zum Durchtrennen (1, 2) umfasst, welche vor dem Dach des Fahrzeugs (3) angeordnet sind.

12. Fahrzeug nach Anspruch 10 oder 11, **dadurch gekennzeichnet, dass** jede Vorrichtung zum Durchtrennen (1, 2) wenigstens einen Haken (7) umfasst, welcher in einer bestimmten Höhe in der genannten Warteposition derartig angeordnet ist, dass sich dieser Haken über dem Dach (13) des Fahrzeugs (3) oder über einem oder mehreren Bedienpersonen (14), welche an Bord des Fahrzeuges (3) Platz nehmen, oder über dem Drehturm (24) des Fahrzeugs befindet.

## Claims

1. A device (1, 2) to section a cable (5) situated across the passage of a vehicle (3), comprising an arm (4) to grab the cable, such arm mounted mobile in rotation around a hinge (6, 9) integral with the vehicle (3) between an active standby position and an angular cutting position, said arm comprising at least one hook (7) to grab the cable, and wherein said arm (4) is subject to the action of return means (8) so as to bring it back from the angular cutting position into the active standby position, said arm automatically moving into the angular cutting position with respect to the vehicle after contact with the cable (5) against the action of the return means (8), device **characterized in that** the angular cutting position is a position which automatically adjusts itself when in contact with the cable which is broken when the arm when tensioned by the arm, the angular cutting position being such that the load exerted on the arm by the tensioned cable passes through the hinge pin (6, 9), the arm (4) thus being mainly subjected to tensile stress.

2. A sectioning device (1, 2) for a cable (5) according to Claim one, **characterized in that** the arm (4) is connected to a hinge (6, 9) so as to be held close against the vehicle in its retracted position.

3. A sectioning device (1, 2) for a cable (5) according to Claim 2, **characterized in that** it comprises retention means (10) fastened to the vehicle (3) such as to be removed to enable the arm to retracted into the front or rear of the vehicle.

4. A section device (1, 2) for a cable (5) according to Claim 3, **characterized in that** the retention means (10) is a cable that can be wound and unwound to ensure that the arm (4) folded back into the vehicle in its retracted position.

5. A sectioning device (1, 2) for a cable (5) according to Claim 4, **characterized in that** the arm is brought into a frontward retracted position by the return means (8) when the retention means (10) are slack or unwound.

6. A sectioning device (1, 2) for a cable (5) according to any one of Claims 1 to 5, **characterized in that** the hinge (6) is directly attached to the vehicle (3).

7. A sectioning device (1, 2) for a cable (5) according to Claim 6, **characterized in that** the hinge pin is guided in a housing (15) fixed to the vehicle.

8. A sectioning device (1, 2) for a cable (5) according to any one of Claims 1 to 5, **characterized in that** the hinge (6) is attached to an intermediate organ (11) fixed to the vehicle.

9. A sectioning device according to any one of the above Claims, **characterized in that** it comprises at least a second hooked (12) attached to the arm (4).

10. A vehicle (3), **characterized in that** it comprises at least one sectioning device (1, 2) according to one of Claims 1 to 9.

11. A vehicle (3) according to Claim 10, **characterized in that** it comprises two sectioning devices (1, 2) arranged to the front of the vehicle's roof.

12. A vehicle according to Claim 10 or 11, **characterized in that** each sectioning device (1, 2) comprises at least one hook (7) arranged at a pre-determined height, in said standby position, such that this hook is above the level of the roof (13) of the vehicle (3) or above the heads of one or several crew members (14) boarding the vehicle (3) or above the turret (24) of the vehicle.
